## Europäisches Patentamt
## European Patent Office
## Office européen des brevets

(11) Veröffentlichungsnummer: **0 289 702**
**A2**

## (12) EUROPÄISCHE PATENTANMELDUNG

(21) Anmeldenummer: **88101460.9**

(22) Anmeldetag: **02.02.88**

(51) Int. Cl.⁴: **F02B 41/10 , F01M 11/06 , F01M 1/02**

(30) Priorität: **06.05.87 DE 3715061**

(43) Veröffentlichungstag der Anmeldung:
**09.11.88 Patentblatt 88/45**

(84) Benannte Vertragsstaaten:
**DE FR GB IT**

(71) Anmelder: **Dr.Ing.h.c. F. Porsche**
**Aktiengesellschaft**
**Porschestrasse 42**
**D-7000 Stuttgart 40(DE)**

(72) Erfinder: **Hain, Klaus, Dipl.-Ing.**
**Obere Torstrasse 10**
**D-7250 Leonberg(DE)**

(54) **Hubkolben-Brennkraftmaschine mit Abgasturbolader und Trockensumpfschmierung.**

㊗ Bei einer Hubkolben-Brennkraftmaschine mit Abgasturbolader und Trockensumpfschmierung ist ein gesonderter Ölbehälter vorgesehen, aus dem mit einer Druckpumpe Schmieröl zu den Schmierstellen der Brennkraftmaschine gefördert und in den das Schmieröl mit einer Rückförderpumpe zurückgepumpt wird. Um auch bei unterschiedlichen geodätischen Höhen einen gleichbleibenden Druck des Schmieröls zu gewährleisten, ist der unabhängig von der geodätischen Höhe konstant gehaltende Ladedruck des Turboladers an den über den Ölspiegel des Ölbehälters befindlichen Luftraum gelegt.

EP 0 289 702 A2

## Hubkolben-Brennkraftmaschine mit Abgasturbolader und Trockensumpfschmierung

Die Erfindung betrifft eine Hubkolben-Brennkraftmaschine mit Abgasturbolader und Trockensumpfschmierung nach dem Oberbegriff des Anspruchs 1.

Bei einer Hubkolben-Brennkraftmaschine mit einer Trockensumpfschmierung wird das Schmieröl aus dem Kurbelgehäuse abgesaugt, einem gesonderten Ölbehälter zugeführt und von dort mit einer Druckpumpe zu den einzelnen Lagerstellen der Brennkraftmaschine gefördert. Wenn der über dem Ölspiegel des Ölbehälters liegende Luftraum Umgebungsdruck hat, so nimmt der Druck auf den Ölspiegel mit zunehmender geodätischer Höhe ab. Auf die Druckpumpe wirkt das so, als würde ihre Ansaughöhe vergrößert; ihr Wirkungsgrad verschlechtert sich. Bei konstanten Abspritzverhältnissen an den Schmierstellen und bei gleichem Öldurchsatz sinkt der Öldruck ab. Besonders kritisch wird die Schmiersituation bei Hubkolben-Brennkraftmaschinen, die mit einem Abgasturbolader aufgeladen sind und so in der Lage sind, Flugzeuge noch in geodätischen Höhen bis ca. 8000 m anzutreiben. Dabei kann der Schmieröldruck so weit absinken, daß die Lager nicht ausreichend mit Öl versorgt sind, heißlaufen und im Extremfall die Wellen festsetzen.

Es ist die Aufgabe der Erfindung, eine gattungsgemäße Brennkraftmaschine so zu gestalten, daß auch bei großer geodätischer Höhe eine ausreichende Lagerschmierung gewährleistet ist.

Zur Lösung dieser Aufgabe dienen die kennzeichnenden Merkmale des Anspruchs 1. Da auf den Luftraum und somit auch auf den Ölspiegel des Ölbehälters immer der Ladedruck des Turboladers wirkt, liegt der Zuführdruck zur Druckpumpe höher als der Umgebungsdruck, so daß auch der an den Schmierstellen zur Verfügung stehende Druck höher liegt und die Lagerschmierung verbessert ist. Von einem mit der geodätischen Höhe abnehmenden Umgebungsdruck ist der Schmieröldruck nicht direkt betroffen.

In vorteilhafter Ausgestaltung der Erfindung nach Anspruch 2 wird der mit dem Turbolader gelieferte Ladedruck konstant gehalten, indem ein Bypaßventil, das in einer Bypaßleitung der Turbine des Turboladers eingesetzt ist, mit zunehmender geodätischer Höhe immer mehr geschlossen wird. Somit bleibt auch der Schmieröldruck konstant und die Gefahr eines Heißlaufens der Lager wird beseitigt.

Der Ladedruck kann direkt am Verdichtergehäuse des Abgasturboladers oder an der Ladeluftleitung zur Brennkraftmaschine entnommen und in einer Druckleitung dem Luftraum des Ölbehälters zugeführt werden. Um bei einer Undichtigkeit am Ölbehälter oder in den Ölleitungen eine zu starke Luftentnahme vom Turbolader und einen Leistungsabfall der Brennkrafmaschine zu verhindern, kann in die Druckleitung eine der Sicherheit dienende Drossel eingesetzt sein.

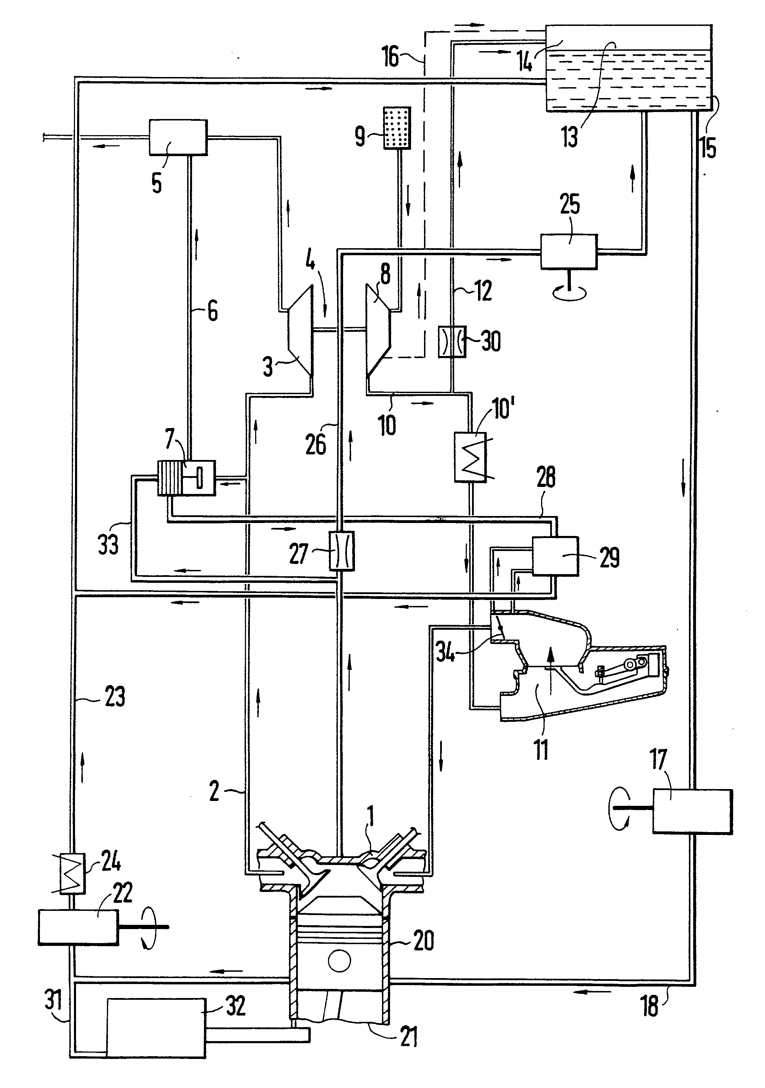

Anhand des in der Zeichnung dargestellten Luft-und Ölleitungssystems der Brennkraftmaschine wird die Erfindung nachfolgend näher erläutert.

Vom Zylinderkopf 1 einer Brennkraftmaschine führt eine Abgasleitung 2 zur Turbine 3 eines Abgasturboladers 4 und von dort nach dessen Durchströmen über einen Schalldämpfer 5 ins Freie. Parallel zur Turbine 3 liegt eine Bypaßleitung 6, in die ein Bypaßventil 7 eingesetzt ist, über das je nach seiner Stellung mehr oder weniger Abgas in den Schalldämpfer 5 gelangt, ohne die Turbine 3 zu beaufschlagen.

Die Turbine 3 treibt einen Verdichter 8, mit dem Luft aus einem Luftfilter 9 angesaugt und unter Druckerhöhung in eine Ladeluftleitung 10 gefördert wird. Die Ladeluftleitung 10 führt über einen Ladeluftkühler 10' zu einem eine Einspritzanlage steuernden Luftmengenmesser 11 und von dort zum Zylinderkopf 1 der Brennkraftmaschine. Von der Ladeluftleitung 10 zweigt zwischen dem Verdichter 8 und dem Ladeluftkühler 10' eine Druckleitung 12 ab, die an den über dem Ölspiegel 13 gelegenen Luftraum 14 eines Ölbehälters 15 angeschlossen ist und ihn mit Ladedruck beaufschlagt. Alternativ hierzu kann der Ladedruck auch durch eine gestrichelt gezeichnete Druckleitung 16 direkt von der Druckseite des Verdichters 8 an den Luftraum 14 gelegt sein.

Mit einer Druckpumpe 17, für die eine Zahnradpumpe gewählt wurde, wird Schmieröl in einer Ölleitungen 18 aus dem Ölbehälter 15 zum Zylinderblock 20 und Kurbelgehäuse 21 der Brennkraftmaschine gepumpt. Eine Rückförderpumpe 22 saugt das Schmieröl am Boden des Kurbelgehäuses 21 ab und pumpt es in der einen Rückleitung 23 über einen Ölkühler 24 in den Ölbehälter 15 zurück. Mit einer Zusatzölpumpe 25 wird in einer zweiten Rückleitung 26 Schmieröl aus dem Zylinderkopf 1 abgesaugt und iber eine Drossel 27 in den Ölbehälter 15 zurückgefördert.

Das Bypaßventil 7 wird so gesteuert, daß der Ladedruck unabhängig von der geodätischen Höhe, in der sich die Brennkraftmaschine befindet, konstant bleibt. Infolgedessen ist auch der in dem Luftraum 14 über dem Ölspiegel 13 liegende Druck des Ölbehälters 15 konstant und die Druckpumpe 17 kann die Schmierstellen der Brennkraftmaschine mit Schmieröl konstanten Öldrucks versorgen. Um zu vermeiden, daß bei einem Leck im Ölbehälter 15 oder in der Druckleitung 12 der Ladedruck so stark abfällt, daß ein sprunghafter Leistungseinbruch der Brennkraftmaschine erfolgt, ist in die Druckleitung 16 eine den Luftdurchsatz begrenzende Drossel 30 eingesetzt. Diese Maßnahme ist besonders wichtig bei Verwendung der Brennkraftmaschine als Flugzeug-Antriebsaggregat und dient der Erhöhung der Betriebssicherheit.

Zur Entlüftung des Kurbelgehäuses 21 ist an ihm eine Entlüftungsleitung 31 angeschlossen, die über einen Ölabscheider 32 führt und in die Rückleitung 23 einmündet. Das im Ölabscheider 32 abgeschiedene Schmieröl läuft drucklos in das Kurbelgehäuse 21 zurück.

Zur Steuerung des Bypaßventils 7 wird ihm Drucköl über eine Druckleitung 33 zugeführt, wobei das Öl aus der Rückleitung 26 vor der Drossel 27 entnommen ist. Das aus dem Bypaßventil in einer Rückleitung 28 zur ersten Rückleitung 23 zurückfließende Öl wird durch einen Druckregler 29 (Sloped controler) gesteuert, der seinerseits von dem an der Drosselklappe 34 herrschendem Druckgefälle der Ladeluft gesteuert ist.

## Ansprüche

1. Hubkolben-Brennkraftmaschine mit einem aus Turbine und Verdichter bestehenden Abgasturbolader, insbesondere als Antriebsaggregat für ein Flugzeug, wobei die Brennkraftmaschine mit einer Trockensumpfschmierung ausgestattet ist und hierzu einen gesonderten Ölbehälter aufweist, dadurch gekennzeichnet, daß der über dem Ölspiegel (13) des Ölbehälters (15) liegende Luftraum (14) mit dem Ladedruck der vom Abgasturbolader (4) gelieferten Ladeluft beaufschlagt ist.

2. Brennkraftmaschine nach Anspruch 1, dadurch gekennzeichnet, daß der Ladedruck bei veränderlicher geodätischer Höhe konstant gehalten wird, indem ein die Turbine (3) des Abgasturboladers (4) umgehendes Bypaßventil (7) mit zunehmender geodätischer Höhe entsprechend geschlossen wird.

3. Brennkraftmaschine nach Anspruch 1, dadurch gekennzeichnet, daß der Luftraum (14) an den Verdichter (8) des Abgasturboladers (4) angeschlossen ist.

4. Brennkraftmaschine nach Anspruch 1, dadurch gekennzeichnet, daß der Luftraum (14) an die vom Verdichter (8) zum Zylinderkopf (1) der Brennkraftmaschine führende Ladeluftleitung (10) angeschlossen ist.

5. Brennkraftmaschine nach Anspruch 3 und 4, dadurch gekennzeichnet, daß in die Druckleitung (12) von der Ladeluftleitung (10) zum Luftraum (14) eine Luftdrossel (30) eingesetzt ist.

6. Brennkraftmaschine nach Anspruch 1, dadurch gekennzeichnet, daß zur Trockensumpfschmierung eine Druckpumpe (17), die das Schmieröl vom Ölbehälter (15) zu den Schmierstellen der Brennkraftmaschine fördert und eine Rückförderpumpe (22) vorgesehen sind, wobei die Rückförderpumpe (22) das Öl aus dem Kurbelgehäuse (21) absaugt und zum Ölbehälter (15) zurückfördert und daß die Druckpumpe (17) und die Rückförderpumpe (22) in einem gemeinsamen Pumpengehäuse untergebracht sind.